(19) Europäisches Patentamt
European Patent Office
Office européen des brevets

(11) Veröffentlichungsnummer: **0 311 703 B1**

(12) **EUROPÄISCHE PATENTSCHRIFT**

(45) Veröffentlichungstag der Patentschrift: **18.12.91**

(51) Int. Cl.⁵: **G05B 19/42**

(21) Anmeldenummer: 87115015.7

(22) Anmeldetag: 14.10.87

(54) **Verfahren zum Steuern einer Werkzeugmaschine.**

(43) Veröffentlichungstag der Anmeldung:
**19.04.89 Patentblatt 89/16**

(45) Bekanntmachung des Hinweises auf die
Patenterteilung:
**18.12.91 Patentblatt 91/51**

(84) Benannte Vertragsstaaten:
**AT BE CH DE ES FR GB GR IT LI LU NL SE**

(56) Entgegenhaltungen:
**EP-A- 204 020**
**EP-A- 0 185 829**
**EP-A- 0 207 998**

**PROCEEDINGS OF THE 14TH ANNUAL MEETING AND TECHNICAL CONFERENCE OF THE
NUMERICAL CONTROL SOCIETY, Pittsburgh,
Pennsylvania, 13.-16. März 1977, Seiten
133-147, NCS, Ins., Glenview, Illinois, US; J.
KOLOC: "Machining technology in computer
aided programming"**

(73) Patentinhaber: **TRAUB Aktiengesellschaft**
**Ulmer Strasse 49-55**
**W-7313 Reichenbach/Fils(DE)**

Patentinhaber: **AB Sandvik Coromant**

**S-811 81 Sandviken(SE)**

(72) Erfinder: **Pilland, Ulrich, Dr.**
**Steetwiesen 22**
**W-7313 Hochdorf(DE)**
Erfinder: **Ray, Franz**
**Friedrichstrasse 14**
**W-7313 Reichenbach/Fils(DE)**
Erfinder: **Hofvenstam, Ake**
**Kungsfurfvegen 22**
**S-81029 Jerbu(SE)**

(74) Vertreter: **Wuesthoff, Franz, Dr.-Ing. et al**
**Wuesthoff & Wuesthoff Patent- und Rechtsanwälte Schweigerstrasse 2**
**W-8000 München 90(DE)**

WERKSTATTTECHNIK. ZEITSCHRIFT FÜR IN-
DUSTRIELLE FERTIGUNG, Band 73, Nr. 10,
Oktober 1983, Seiten 648-650, Springer-
Verlag, Würzburg, DE; R. OHNHEISER:
"Rechnerunterstützte Maschinen- und Postprocessorauswahl bei der NC-
Programmierung"

WERKSTATTTECHNIK. ZEITSCHRIFT FÜR IN-
DUSTRIELLE FERTIGUNG, Band 76, Nr. 2, Februar 1986, Seiten 79-84, Springer-Verlag,
Stuttgart, DE; K. LANGE et al.: "Neue Wege
für Konstruktion und Fertigung von Umformwerkzeugen durch CAD/CAM"

FLEXIBLE AUTOMATION, 7/86, CNC-
PROGRAMMIERUNG, Seiten 42-44,
"Generationswechsel bei der Programmierung"

## Beschreibung

Die Erfindung betrifft ein Verfahren zum Steuern einer Werkzeugmaschine mit den Merkmalen des Oberbegriffs des Patentanspruches 1.

Aus der Zeitschrift "WERKSTATT-TECHNIK", Zeitschrift für industrielle Fertigung, Bd. 73, Nr. 10, Oktober 1983, S. 648 - 650, Springer-Verlag, Würzburg, DE; R. Ohnheiser: "Rechnergestützte Maschinen- und Postprocessorauswahl bei der NC-Programmierung", ist ein solches Verfahren bekannt. Dort wird für eine gegebene Werkzeugmaschine in einer Datenverarbeitungsanlage eine für diese Werkzeugmaschine spezifische Wissenbasis abgespeichert.

Aus der Zeitschrift "PROCEEDINGS OF THE 14TH ANNUAL MEETING AND TECHNICAL CONFERENCE OF THE NUMERICAL CONTROL SOCIETY", Pittsburgh, Pennsylvania, 13. - 16. März 1977, S. 133 - 147, NCS, Ins., Glenview, Illinois, US; J. KOLOC: "machining technology in computer aided programming" ist es bekannt, mittels einer Bedienungsperson Daten, insbesondere bezüglich des Werkstoffes, des Werkzeugtypes und der angestrebten Oberflächengüte des herzustellenden Artikels in die Datenverarbeitungsanlage zur Steuerung der Werkzeugmaschine einzugeben.

Aus der Zeitschrift "FLEXIBLE AUTOMATION", 7/86, CNC-PROGRAMMIERUNG, S. 42 - 44, "Generationswechsel bei der Programmierung" ist es bekannt, zur Steuerung von Werkzeugmaschinen eine Programmiertechnik vorzusehen, bei der der Bediener der Maschine mittels einer Simultan auf einem Bildschirm erscheinenden Grafik angeleitet wird.

Der Betrieb einer numerisch gesteuerten Werkzeugmaschine wird durch eine Vielzahl von Einflußgrößen bestimmt. Für einen optimalen Betrieb der Werkzeugmaschine müssen Daten bezüglich des Werkstückes, des Werkzeuges, der Werkzeugmaschine selbst, des angewandten Spanungsverfahrens sowie allgemeine Randbedingungen, wie Standzeiten, Verschleiß etc., berücksichtigt werden.

Beim Stand der Technik erfordert eine vollständige Berücksichtigung dieser Einflußgrößen, daß die Bedienungsperson über beträchtliche Kenntnisse der Zusammenhänge verfügen muß und überdies auch die Datenverarbeitungsanlage, mit welcher die Werkzeugmaschine gesteuert wird, programmieren muß. Die Bedienungsperson muß also über umfangreiche Kenntnisse der Zusammenhänge der einzelnen Einflußgrößen verfügen und gleichzeitig eine Programmiersprache beherrschen. Der Programmiervorgang ist sehr aufwendig.

Bekannte Datenverarbeitungsanlagen für die Ermittlung optimaler Betriebsdaten zum Betrieb einer Werkzeugmaschine sind nicht maschinenspezifisch. Sollen für eine bestimmte, gegebene Werkzeugmaschine Datensätze zum Steuern derselben gewonnen werden, so müssen bei der Programmierung der Datenverarbeitungsanlage auch gesondert die Daten der gerade verwendeten Maschine berücksichtigt und eingegeben werden, wodurch sich der Arbeitsaufwand wesentlich erhöht.

Die oben erwähnten technischen Einflußgrößen für den optimalen Betrieb einer Werkzeugmaschine sind das Werkstück, das Werkzeug, das Bearbeitungsverfahren und allgemeine Randbedingungen (näheres siehe unten).

Die vorstehend genannten Einflußgrößen sind weitgehend voneinander abhängig, d. h. für einen optimalen Betrieb einer Werkzeugmaschine müssen die einzelnen Werte aufeinander abgestimmt werden. Die Änderung einer Einflußgröße kann die Änderung von einer oder mehreren anderen Einflußgrößen zur Folge haben.

Bei der Bestimmung der Steuerdaten für die Werkzeugmaschine geht es wesentlich um die sogenannte Schnittdatenermittlung. Diese umfaßt die Auswahl einer optimalen Schneidengeometrie (Abmessung der Schneide, Radien, Form, Spanleitstufen etc.) und die Auswahl der richtigen Schneidstoffsorte (also das Material der Schneide). Daneben sind Schnittwerde zu ermitteln, also die optimalen Schnittgeschwindigkeiten, Grenzdrehzahlen einschließlich der dabei erforderlichen Getriebestufe der Werkzeugmaschine, der Vorschub für den Werkzeugschlitten, die Schnittiefe, die Anzahl der Schnitte, das minimale Aufmaß (also das abzuspanende Material bei Schlicht- oder Vorbearbeitungsoperationen), die erforderliche Arbeitsspindelleistung sowie die Schneideneingriffszeit.

Der Erfindung liegt die Aufgabe zugrunde, ein Verfahren zum Steuern einer Werkzeugmaschine mittels einer Datenverarbeitungsanlage bereitzustellen, mit dem eine Bedienungsperson ohne besondere Programmierkenntnisse und auch ohne besondere Kenntnisse der einzelnen wechselseitigen Abhängigkeiten der Einflußgrößen einen optimalen Zerspanungsprozeß durchführen kann.

Die erfindungsgemäße Lösung dieser Aufgabe ist im Patentanspruch 1 gekennzeichnet.

In den Unteransprüchen sind bevorzugte Ausgestaltungen der Erfindung beschrieben.

Während beim Verfahren gemäß der EP-A1-44 192 noch die Daten zum Steuern der Werkzeugmaschine unabhängig von dieser, also zentral für eine Vielzahl von Werkzeugmaschinen aufbereitet werden, wird beim erfindungsgemäßen Steuerverfahren die Datenverarbeitungsanlage mit einer bestimmten, gegebenen Werkzeugmaschine integriert. Alle mit der gegebenen Werkzeugmaschine verbundenen Daten können deshalb in einer permanent in der Datenverarbeitungsanlage gespeicherten Wissensbasis abgelegt werden und die Bedienungsperson braucht für alle mit dieser Maschine durchzuführenden Zerspanungsprozesse keinerlei Daten über die Maschine bei der Ermittlung und Errechnung optimaler Zerspanungsparameter einzugeben. Diese Daten sind vielmehr ein- und für allemal in der Wissensbasis verfügbar.

Weiterhin sind erfindungsgemäß in der Wissenbasis einmal erarbeitete Hilfsprogramme abgelegt, die für alle zukünftigen Zerspanungsprozesse verfügbar sind. Diese Hilfsprogramme ermöglichen für ein konkretes Zerspanungsvorhaben die Auswahl, Ermittlung und Berechnung aller oben genannten Einflußgrößen, wobei die Bedienungsperson nur die für die Berechnung erforderlichen Eingaben durchführen muß, wie Daten bezüglich des Werkstückstoffes, des zu verwendenden Werkzeugtyps und der angestrebten Oberflächengüte des durch Spanung herzustellenden Artikels. Die Datenverarbeitungsanlage ermittelt dann mit Hilfe der in der Wissensbasis abgelegten Unterprogramme die geeigneten Schnittdaten für die Ausführung des Zerspanungsprozesses einschließlich einer Bewertung bezüglich der einzelnen Schnittdaten. Dabei werden erfindungsgemäß die möglichen Schneidstoffsorten (also die unterschiedlichen Materialien der in der gegebenen Maschine verfügbaren Schneid-Werkzeuge) und die möglichen Schneidenformen (also die Geometrie der zerspanenden Schneidkante) unabhängig voneinander bewertet. Es werden dann alle möglichen Paarungen von Schneidstoffsorten und Schneidenformen durch Kombination gebildet und ebenfalls bewertet. Die Bewertung erfolgt nach interessierenden Maßstäben, berücksichtigt also insbesondere den Zeitbedarf, die Güte, die Abweichung von optimalen Schnittwerten oder die Überschreitung von absoluten Grenzwerten, die ebenfalls in der Wissensbasis abgelegt sind.

Die Bewertung kann der Bedienungsperson auf einem Bildschirm, welcher zusammen mit einer Tastatur die Schnittstelle zur Bedienungsperson bildet, in Form einer üblichen Benotung angegeben werden, also z. B. als "sehr gut", "gut", "befriedigend", ... "ungenügend", wobei noch gegebenenfalls hinter der Bewertungsnote die einzelnen Vor- und Nachteile bezüglich Zeit und/oder Güte etc. aufgeführt sein können.

Aus den bewerteten Sätzen von Schnittdaten wird der günstigste ausgewählt und automatisch in die Steuerung der Werkzeugmaschine eingegeben.

Alternativ kann vorgesehen sein, daß die Bedienungsperson unter den angezeigten Schneidstoffsorten/Schneidengeometrie-Paarungen die ihr am günstigsten erscheinende auswählt und einen entsprechenden Befehl in die Datenverarbeitungsanlage eingibt.

Auch kann gemäß einer weiteren Variante der Erfindung vorgesehen sein, daß die Bedienungsperson willkürlich Schneidstoffsorten/Schneidengeometrie-Paarungen in die Datenverarbeitungsanlage eingibt, welche dann mittels der Wissensbasis und der abgespeicherten Unterprogramme auf ihre Eignung hin überprüft und bewertet werden.

Alle die Wissensbasis bildenden Daten sind zuvor empirisch-experimentell ermittelt worden.

In einer bevorzugten Ausgestaltung des erfindungsgemäßen Verfahrens ist vorgesehen, daß der Bedienungsperson alle in der Werkzeugmaschine gegebenen Spannmittel bildlich angezeigt werden und die Bedienungsperson hieraus für den vorgesehenen Spanprozess das geeignete Spannmittel auswählt.

Auch kann als Alternative zu der oben angegebenen Ermittlung optimaler Schneidstoffsorten/Schneidenform-Paarungen mittels der Wissensbasis aufgrund der von der Bedienungsperson eingegebenen Daten bezüglich des Werkstückstoffes, des Werkzeugtyps und der angestrebten Oberflächengüte vorgesehen sein, daß die Bedienungsperson umgekehrt Vorschläge bezüglich z. B. gewünschter Schneidstoffarten und/oder Schneidenformen willkürlich in die Datenverarbeitungsanlage eingibt, welche dann aufgrund der im vorliegenden Fall gegebenen Einflußgrößen eine Bewertung der eingegebenen Schneidstoffart und Schneidenform vornimmt.

Nachfolgend wird ein Ausführungsbeispiel der Erfindung anhand der Zeichnung näher erläutert. Es zeigt:

Fig. 1    ein schematisches Blockdiagramm der beim erfindungsgemäßen Verfahren eingesetzten Hardware, und

Fig. 2    ein Flußdiagramm zur Erläuterung des erfindungsgemäßen Verfahrens zum Ermitteln optimaler Schnittdaten für die Maschinensteuerung.

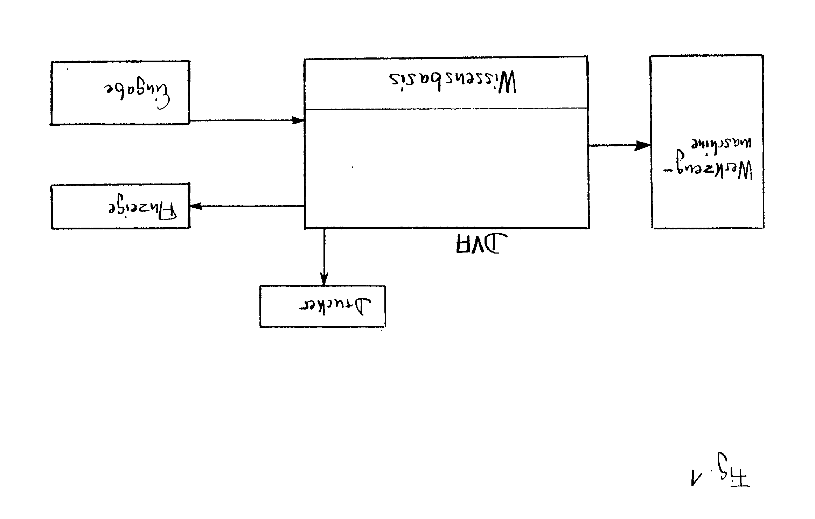

Die in Fig. 1 gezeigten Komponenten Werkzeugmaschine, Datenverarbeitungsanlage (DVA), Eingabe, Anzeige und Drucker sind mit einer gegebenen Werkzeugmaschine integriert. Die DVA steuert einerseits direkt die Werkzeugmaschine und erhält andererseits über die Eingabe Informationen seitens der Bedienungsperson, aus denen das Bearbeitungsprogramm zum Betreiben der Werkzeugmaschine abgeleitet wird. Die DVA wirkt interaktiv mit der Bedienungsperson zusammen, d. h. die DVA stellt der Bedienungsperson über die Anzeige Fragen und gibt Zwischen- und Endergebnisse aus, ggf. über einen Drucker.

Die in der DVA abgelegte Wissensbasis enthält das gesamte empirisch und rechnerisch ermittelte Wissen über auf der Werkzeugmaschine durchführbare Zerspanungsprozesse. Dieses Wissen kann grob in folgende Einflußgrößen aufgeteilt werden:

Erste Einflußgröße "Werkzeugmaschine":

Bezüglich der Werkzeugmaschine sind folgende Kenngrößen wesentlich: Drehzahlbereich, Antriebskennlinienfeld (Kraft, Leistung, Drehmoment), Getriebestufen, Achsvorschubkräfte und entsprechende Geschwindigkeiten, maximale Schnittkraft, Spannkraft, Drehzahlbegrenzung, Reibungsbeiwerte, Futterzustand, Reitstock, Lünette, sowie statische und dynamische Stabilitäten.

Zweite Einflußgröße "Werkstück":

In der Wissensbasis werden Daten abgespeichert über mögliche Werkstückstoffe (Materialien), deren Behandlungszustand, Härte, Legierungsbestandteile, Festigkeit, Oberflächenbeschaffenheit, Spanungsverhalten, Spanbarkeit und Spanform.

Überdies werden Daten abgespeichert bezüglich der möglichen Werkstückgeometrie, insbesondere Roh-Fertigmaße, Werkstückstabilitäten, Oberflächengüten, Genauigkeitsanforderungen und Schnittunterbrechungen.

Dritte Einflußgröße "Werkzeug":

In der Wissensbasis werden bezüglich des auf der gegebenen Werkzeugmaschine einsetzbaren Werkzeuges Informationen über Werkzeug-Grundtypen, deren Abmessungen und Stabilitäten abgespeichert. Diese Daten betreffen zum einen die Schneidenform und zum anderen die Schneidstoffsorte. Bezüglich der Schneidenform werden abgespeichert: die Grundgeometrien, Schneidengeometrien, Spanleitstufengeometrien, Belastbarkeiten, Arbeitsbereiche, Eignung für unterschiedliche Bearbeitungen (wie Drehen, Fräsen, Bohren ...). Hinsichtich der Schneidstoffsorte werden insbesondere Daten abgespeichert über Eignung für bestimmte Werkstückstoffe, Schnittverhältnisse, Stabilitäten, Arbeitsbereiche für die Schnittgeschwindigkeiten, Spanquerschnitte sowie Eignungen für die einzelnen Bearbeitungen.

Vierte Einflußgröße "Bearbeitungsverfahren":

Entsprechend den unterschiedlichen, auf der Werkzeugmaschine durchführbaren Bearbeitungsvorgängen werden diesbezügliche Informationen in der Wissensbasis abgelegt. Als Bearbeitungsverfahren sind vorgesehen: Drehen (Schruppen, Schlichten, Konturdrehen, Abstechen), Bohren, Fräsen und Gewindefertigung.

Als fünfte Einflußgröße sind noch allgemeine Randbedingungen und Begrenzungen zu berücksichtigen, insbesondere Standzeiten der Schneidwerkzeuge, Verschleiß einzelner Teile und andere Parameter.

Alle vorstehend genannten Einflußgrößen bestimmen den Zerspanungsprozeß.

Die einzelnen Einflußgrößen sind in komplexer Weise voneinander abhängig. Für die Herstellung eines bestimmten Fertigteiles aus einem gegebenen Rohling müssen je nach den Anforderungen ganz bestimmte Werte der einzelnen Einflußgrößen ausgewählt und bestimmt werden, wobei die Abänderung einer Einflußgröße zur Folge haben kann, daß eine oder mehrere andere Einflußgrößen ebenfalls abgeändert werden müssen, wenn das Zerspanungsergebnis bestimmten Qualitätsanforderungen genügen soll und die Bearbeitung in möglichst kurzer Zeit durchgeführt werden soll.

Hinsichtlich der Beurteilungskriterien Zeit, Qualität, Einhaltung vorgegebener Grenzwerte etc. sind unterschiedliche Sätze von Einflußgrößen unterschiedlich zu beurteilen, d. h. es gibt eine Qualitäts-Rangfolge für unterschiedliche Sätze von Einflußgrößen bei der Steuerung der Werkzeugmaschine.

Diese komplexen Abhängigkeiten sind zum Teil in der Literatur bekannt und werden dort, wo sie nicht bekannt sind, empirisch ermittelt.

Weiterhin werden in der Wissenbasis der DVA auch die Kenntnisse über die einzelnen Einflußgrößen und deren Zusammenhänge in Form von Hilfsprogrammen abgelegt, welche jeweils ausgewählten Einzelwerten für die verschiedenen Einflußgrößen die zugehörigen Schnittdaten zuordnen, nämlich insbesondere die möglichen Schnittgeschwindigkeiten, Vorschübe und Schnittiefen.

Im einzelnen beinhaltet diese Ermittlung der Schnittdaten folgende Einzelschritte:

a) Es wird die günstigste Werkstückstoff/Schneidstoff-Kombination ermittelt, d. h. für den zu spanenden Werkstückstoff wird die bestgeeignete Schneidstoffsorte (Material) festgelegt.

b) Für ein vorgegebenes Werkstück und den daraus herzustellenden Artikel sind auszuwählen: die günstigste Schneidegeometrie (Abmessung der Schneide, Radien, Form, Spanleitstufen etc.).

c) Aus den ebenfalls in der Wissensbasis abgespeicherten Daten bezüglich der Werkzeugmaschine sind zu ermitteln: die Schnittgeschwindigkeit $v_C$, die Grenzdrehzahl n und die erforderliche Getriebestufe.

d) Aufgrund der vorgegebenen Bedingungen sind zu berechnen: der Vorschub f für den Werkzeugschlitten, die Schnittiefe $a_p$, die Anzahl der Schnitte i, das minimale Aufmaß (das abzuspanende Material bei Schlicht- oder Vorbearbeitunsoperationen), die erforderliche Arbeitsspindelleistung $P_e$ und die Schneideneingriffszeit $t_n$.

Erfindungsgemäß braucht die Bedienungsperson lediglich den zu verarbeitenden Werkstückstoff, den erforderlichen allgemeinen Werkzeugtyp, die Fertigteilform und die angestrebte Oberflächengüte anzugeben. Daraus ermittelt die DVA aufgrund der abgespeicherten Wissenbasis die möglichen Schnittwerte für alle möglichen Schneidenform/ Schneidenstoff-Paarungen einschließlich einer Bewertung der einzelnen Paare. Die DVA wählt das beste Schneidenform/Schneidenstoff-Paar einschließlich der zugehörigen Schnittdaten aus und steuert damit direkt die Werkzeugmaschine.

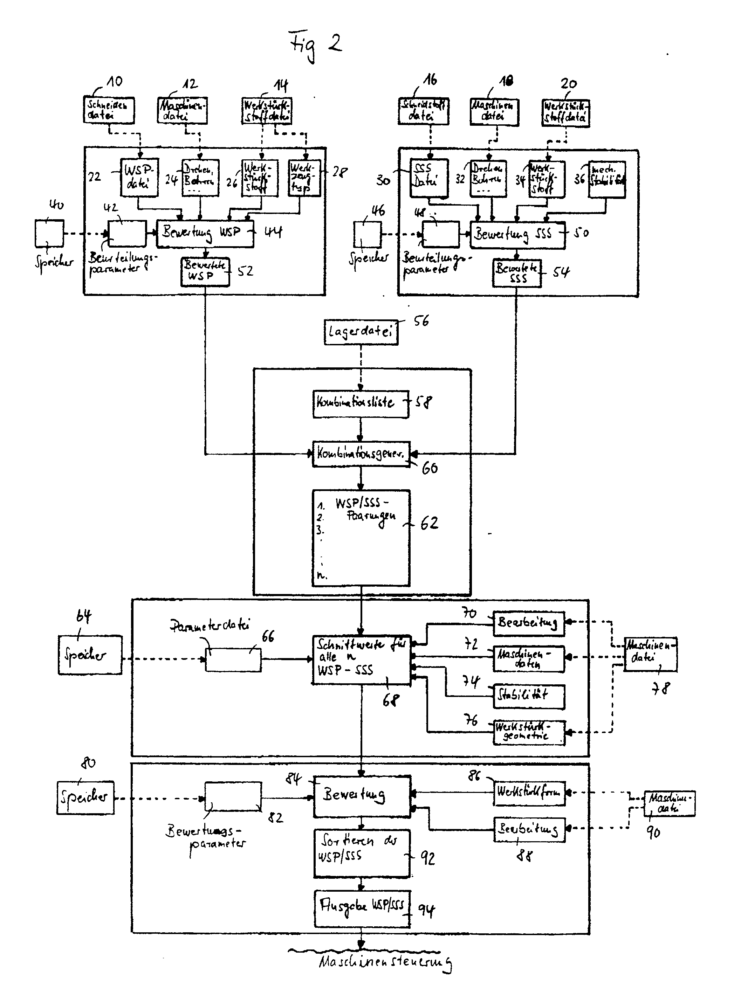

Anhand der Fig. 2 soll nachfolgend das erfindungsgemäße Verfahren zum Ermitteln der günstigsten Schneidenform/Schneidstoffsorten-Paarungen einschließlich der zugehörigen Schnittdaten beschrieben werden.

Im Flußdiagramm gemäß Fig. 2 beschreiben die Funktionsblöcke 10, 12, 14, 22, 24, 26, 28, 40, 42, 44 und 52 die Ermittlung einer geeignete Schneidenform, in der Zeichnung WSP genannt, für Wendeschneidplatte. In der DVA sind also unterschiedliche Wendeschneidplatten und dementsprechend unterschiedliche Schneidenformen verfügbar, welche in der Wissensbasis abgelegt sind. Die Schneidendatei 10, die Maschinendatei 12 und die Werkstückstoffdatei 15 sind also in der Wissensbais gemäß Fig. 1 enthalten. In den Bewertungsblock "WSP" 44 werden alle mit der Schneidenform (Schneidendatei 10) zusammenhängenden Daten einschließlich Beurteilungsparameter 42 aus einem gesonderten Speicher 40 eingegeben. Es erfolgt eine Bewertung der einzelnen Wendeschneidplatten WSP und die für den gegebenen Werkstückstoff und die gegebenen Maschinendaten geeigneten Wendeschneidplatten werden einschließlich einer Bewertung durch den Funktionsblock 52 ausgegeben.

Parallel dazu wird mittels der Funktionsblöcke 16, 18, 20, 30, 32, 34, 36, 46, 48, 50 und 54 ein Satz von Schneidstoffsorten SSS ermittelt und ausgegeben. Die einzelnen Schneidstoffsorten (SSS) werden ebenfalls bewertet. Gemäß Fig. 2 erfolgt die Auswahl und Bewertung der SSS unter Berücksichtigung der Maschinendaten (Block 10) und des Stoffes des zu zerspanenden Werkstückes (Werkstückstoffdatei 20). Ebenfalls berücksichtigt wird der sogenannte Bearbeitungsfall, d. h. ob zum Beispiel gedreht, gebohrt oder gefräst wird. In der Wissensbasis sind ebenfalls Beurteilungsparameter (Block 48, Speicher 46) abgelegt, die eine Beurteilung dahingehend ermöglichen, ob eine bestimmte Schneidstoffsorte (zunächst unabhängig von der Schneidenform) für den gewünschten Zerspanungsprozeß geeignet ist.

Es werden dann im Kombinationsgenerator 60 die zunächst unabhängig voneinander ermittelten, bewerteten Wendeschneidplatten WSP und Schneidstoffsorten SSS miteinander kombiniert. Aufgrund der in den Funktionsblöcken 52, 54 vorgenommenen Vorab-Bewertungen werden nur bestimmte WSP/SSS-Paarungen, nämlich maximal n Paarungen erzeugt, wobei n eine vorgegebene Zahl ist. Durch die beschriebene Vorab-Bewertung der Einflußgrößen WSP und SSS wird der Rechenaufwand erheblich reduziert.

Für die erstbesten WSP/SSS-Paarungen werden dann gemäß Funktionsblock 68 die zugehörigen Schnittwerte, nämlich die Schnittgeschwindigkeiten, Vorschübe und Schnittiefen, bestimmt. Hierzu dienen ebenfalls in der Wissensbasis abgespeicherte Daten und Hilfsprogramme (siehe Speicher 64 und Parameterdatei 66). In die Ermittlung der Schnittwerte für alle n WSP/SSS-Paarungen sind weiterhin erforderlich Daten bezüglich der durchzuführenden Bearbeitung (Drehen, Fräsen ...; Bearbeitungsblock 70) die Maschinendaten (Block 72), Angaben über die Stabilität (Block 74) und die Werkstückgeometrie (Block 76).

Alle genannten Daten werden im Block 68 verarbeitet, um für alle WSP/SSS-Paarungen die zugehörigen Schnittwerte zu errechnen.

Die Ermittlung der zu den einzelnen WSP/SSS-Paarungen gehörigen Schnittdaten unter Berücksichtigung der gegebenen Einzelwerte aller Einflußgrößen geschieht wie folgt:

a) Es werden die Spanquerschnittsbereiche bestimmt,

b) es werden die Spanquerschnitte aufgrund der gegebenen Schnittkraft eingegrenzt,

c) es werden die Spanquerschnitte aufgrund der geometrisch gegebenen Abmessungen des Werkstückes eingegrenzt,

d) es werden die Schnittgeschwindigkeit und der Spanquerschnitt an die maximal verfügbare Leistung der Maschine angepaßt,

e) es werden die Schritte a) bis d) für alle möglichen Getriebestufen der Werkzeugmaschine und WSP/SSS-Paarungen durchgeführt und dabei jeweils alle Eingriffszeiten berechnet, und

f) es wird die am besten geeignete Getriebestufe ausgewählt.

Die WSP/SSS-Paarungen werden dann in den Bewertungsblock 84 eingegeben, in dem ihre Bewertung unter Berücksichtigung der gegebenen Werkstückform, der gewünschten Bearbeitung (Drehen, Fräsen, Bohren etc.) und unter Beachtung von ebenfalls in der Wissenbasis abgelegten Bewertungsparametern (Speicher 80, Block 82) vorgenommen wird. Wesentliche Bewertungsparameter sind die Eingriffszeit und die Güte des durch Zerspanung hergestellten Produktes. Für die Grobbearbeitung ist die Zeit der wesentliche Bewertungsparameter, während es bei einer Feinbearbeitung wesentlich auf die Güte der erzeugten Oberfläche und die Maßgenauigkeit ankommt. Weitere Bewertungsparameter sind die Abweichung von optimalen Schnittwerten und/oder das Überschreiten oder Unterschreiten von vorgegebenen Grenzwerten.

Im Funktionsblock 92 werden dann die einzelnen WSP/SSS-Paarungen gemäß dem Bewertungsergebnis sortiert, d. h. die günstigste Paarung wird an erster Stelle, die zweitgünstigste an zweiter Stelle usw. angeordnet. Das Sortierergebnis wird der Bedienungsperson auf einer Anzeigeeinrichtung (siehe Fig. 1) angezeigt oder auch mittels eines Druckers ausgegeben. Die DVA wählt den günstigsten Satz von Schnittdaten aus und steuert damit automatisch die Werkzeugmaschine.

**Patentansprüche**

1. Verfahren zum Steuern einer Werkzeugmaschine mittels einer Datenverarbeitungsanlage, bei dem eine Bedienungsperson Daten bezüglich eines durch Spanung herzustellenden Artikels in die Datenverarbeitungsanlage eingibt, welche hieraus Steuerbefehle für den Betrieb der Werkzeugmaschine ableitet, wobei

a) für eine gegebene Werkzeugmaschine in der Datenverarbeitungsanlage eine für diese Werkzeugmaschine spezifische Wissensbasis abgespeichert wird, die enthält:
- Daten bezüglich der gegebenen Werkzeugmaschine (Maschinendateien 12, 18), wie den Drehzahlbereich, Antriebskennlinienfelder (Kraft, Leistung, Drehmoment), Getriebestufen, Achsvorschubkräfte und zugehörige Geschwindigkeiten, maximale Schnittkraft; Werkstück-Einspannkraft, Drehzahlbegrenzung, Futterzustand, Reibungsbeiwerte, Reitstock, Lünette und statische sowie dynamische Stabilitäten;
- Daten bezüglich möglicher Werkstücke (Werkstückstoffdateien 14, 20), wie Werkstückstoffe, Behandlungszustände, Legierungsbestandteile, Festigkeiten, Oberflächenbeschaffenheiten, Spanungsverhalten, Spanbarkeit, Spanform; Werkstückformen, wie die Maße von Rohlingen, Werkstückstabilitäten, Oberflächengüten, Genauigkeitsanforderungen und Schnittbedingungen (kontinuierlicher/unterbrochener Schnitt);
- Daten bezüglich in der gegebenen Werkzeugmaschine einsetzbarer Werkzeuge (Werkzeugtypdatei 28), wie einzelner Werkzeugtypen, deren Stabilität und Abmessungen einschließlich der Schneidengeometrie, Belastbarkeit, Arbeitsbereich; Schneidstoffsorten und deren Eignung für bestimmte Werkstückstoffe, Schnittverhältnisse, Stabilität, mögliche Schnittgeschwindigkeiten, Spanquerschnitte und Eignung für bestimmte Bearbeitungen;
- Daten bezüglich einzelner Bearbeitungsverfahren (Dateien 24. 32), wie Drehen, Schruppen, Schlichten, Konturdrehen, Abstechen, sowie Bohren, Fräsen und Gewindefertigung;
- Daten bezüglich allgemeiner Randbedingungen beim spanenden Bearbeiten des Werkstückes, wie Standzeiten, Verschleiß etc., und

b) die Bedienungsperson Daten bezüglich des Werkstückstoffes, des Werkzeugtyps, der Fertigteilform und der angestrebten Oberflächengüte des herzustellenden Artikels in die Datenverarbeitungsanlage eingibt,

dadurch **gekennzeichnet,** daß

c) die Wissensbasis auch Unterprogramme und Daten enthält, die mit den vorstehend angegebenen, von der Bedienungsperson eingegebenen Daten die möglichen zugehörigen Schnittwerte, Schneidstoffsorten und Schneidenformen, wie sie in der gegebenen Werkzeugmaschine einsetzbar sind, bestimmen können,

d) von der Datenverarbeitungsanlage mittels der genannten Unterprogramme die möglichen Schnittwerte und Schneidstoffsorten/Schneidenformen-Paarungen einschließlich einer Bewertungsangabe bestimmt und angezeigt werden, wobei die möglichen Schneidstoffsorten und die möglichen Schneidenformen unabhängig voneinander gemäß den oben genannten Daten für die Werkzeugmaschine (Maschinendateien 12, 18), Werkstücke (Werkstückstoffdateien 14, 20) und die Bearbeitungsart (Speicher 66, Funktionsblock 48) bewertet werden und dann aufgrund einer für die Schneidstoffsorten und die Schneidenformen unabhängigen Vorabbewertung ausgewählte Paarungen (WPS/SSS) von Schneidstoffsorten und Schneidenformen erzeugt und ebenfalls bewertet werden unter Berücksichtigung der gegebenen Werkstückform, der erforderlichen Bearbeitung und unter Beachtung der Eingriffszeit und der Güte des durch Spanung herzustellenden Produktes, und

e) von den derart bestimmten Schnittwerten sowie Schneidstoffsorten/Schneidenformen-Paarungen automatisch ein Satz ausgewählt und direkt zur Steuerung der Werkzeugmaschine herangezogen wird oder daß die Bedienungsperson aus den angezeigten Schnittwerten sowie Schneidstoffsorten/Schneidenformen-Paarungen für die Steuerung der Werkzeugmaschine heranzuziehende Werte bzw. Paarungen auswählt oder daß die Bedienungsperson willkürlich Schnittwerte -oder Schneidstoffsorten/Schneidenformen-Paarungen in die Datenverarbeitungsanlage eingibt, welche dort mittels der Wissensbasis und der Unterprogramme geprüft und bewertet werden.

2. Verfahren nach Anspruch 1,
   dadurch **gekennzeichnet,**
   daß für mehrere Paarungen von Schneidstoffsorten und Schneidenformen durch die Datenverarbeitungsanlage mittels der Unterprogramme zumindest folgende Schnittdaten bestimmt, angezeigt und bewertet werden:
   - die möglichen Schnittgeschwindigkeiten,
   - die möglichen Vorschübe und
   - die möglichen Schnittiefen.

3. Verfahren nach Anspruch 2,
   dadurch **gekennzeichnet,**
   daß durch die Datenverarbeitungsanlage mittels der Unterprogramme die Schnittgeschwindigkeit und der Spanquerschnitt an die verfügbare Maximal-Leistung der Werkzeugmaschine angepaßt werden.

4. Verfahren nach Anspruch 3,
   dadurch **gekennzeichnet,**
   daß durch die Datenverarbeitungsanlage mittels der Unterprogramme für alle möglichen Getriebestufen der Werkzeugmaschine sowie alle möglichen Schneidform/Schneidstoff-Paarungen die erforderlichen Eingriffszeiten berechnet werden und die günstigste Eingriffszeit ausgewählt wird.

## Claims

1. A method of controlling a machine tool by a data processing system, wherein an operator enters data in respect of an article to be made by machining into the data processing system which derives control commands from the same for operation of the machine tool, with
   a) specific basic knowledge pertaining to a given machine tool being stored in the data processing system for this particular machine tool, such basic knowledge comprising:
   - data in respect of the given machine tool (machine files 12,18), such as the rotational speed range, families of drive characteristics (force, performance, torque), transmission steps, axial feeding forces and related speeds, maximum cutting power; workpiece clamping force, limit of number of revolutions, chuck condition, coefficients of friction, tailstock, rest, and static as well as dynamic stabilities;
   - data in respect of possible workpieces (workpiece material files 14, 20), such as materials of workpieces, treatment status, component alloys, strength values, surface properties, cutting behavior, suitability for cuting, chip shape; forms of workpieces, such as dimensions of blanks, workpiece stabilities, surface finish, accuracy requirements, and cutting conditions, (continuous/ interrupted cut);
   - data in respect of tools suitable for use in the given machine tool (tool type file 28), such as individual types of tools, their stabilities and dimensions, including cutting edge geometry, load bearing capacity, working range; kinds of cutter material and their suitability for certain types of workpiece materials, cutting conditions, stability, possible cutting speeds, chip cross sections, and suitability for certain kinds of machining;
   - data in respect of individual machining processes (files 24. 32), such as turning, roughing, finishing, profile shaping, trimming, as well as drilling, milling, and thread cutting;
   - data in respect of general marginal conditions in the machining of the workpiece, such as service life, wear, etc., and
   b) the operator entering data into the data processing system in respect of the material of the workpiece, the type of tool, the shape of the finished part, and the desired surface finish of the article to be produced,
   **characterized** in that
   c) the basic knowledge also comprises subroutines and data suitable to determine, together with the data mentioned above which are entered by the operator, the possible corresponding cutting values, kinds of cutter material, and forms of cutting edges, suitable for use in the given machine tool,
   d) the data processing system determines and indicates the possible cutting values and pairings of kind of cutter material/form of cutting edge, including an evaluation statement, by means of said subroutines, the possible kinds of cutter material and the possible forms of cuting edge being evaluated independently of each other according to the above mentioned data for the machine tool (machine files 12, 18), workpieces (workpiece material files 14, 20), and manner of machining (memory 66, function block 48), and selected pairings (WPS/SSS) of kinds of cutter material and forms of cutting edge thereupon being generated, based on a preliminary assessment which is independent for the kinds of cutter material and the forms of cutting edge, and also being evaluated in consideration of the given form of workpiece, the machining required and taking into account the time of engagement and the quality of the product to be made by machining, and
e) a set of the cutting values thus determined as well as of the pairings of kind of cutter material/form of cutting edge is selected automatically and drawn upon directly for control of the machine tool, or the operator selects cutting values and pairings of kind of cutter material/ form of cutting edge to be drawn upon for control of the machine tool from the cuting values and pairings displayed, or the operator enters cutting values or pairings of kind of cutter material/form of cutting edge at random into the data processing system where they are checked and evaluated with the aid of the basic knowledge and the subroutines.

2. The method as claimed in claim 1, characterized in that the data processing system determines, indicates, and evaluates at the least the following cutting data
   - the possible cutting speeds,
   - the possible feeds, and
   - the possible cutting depths
   by means of the subroutines, in case of a plurality of pairings of kinds of cutter materials and forms of cutting edges.

3. The method as claimed in claim 2, characterized in that the data processing system matches the cutting speed and the chip cross section with the maximum capacity available of the machine tool, by means of the subroutines.

4. The method as claimed in claim 3, characterized in that the data processing system calculates the necessary times of engagement for all the transmission steps possible of the machine tool and all the possible pairings of form of cutting edge/kind of cutter material and selects the most favorable time of engagement, by means of the subroutines.

## Revendications

1. Procédé pour commander une machine-outil au moyen d'une installation de traitement de données, selon lequel un opérateur introduit des données concernant un article à fabriquer par enlèvement de copeaux dans l'installation de traitement de données, laquelle en déduit des instructions de commande pour l'exploitation de la machine-outil, procédé dans lequel
   a) pour une machine-outil déterminée, une base de connaissances spécifique pour cette machine-outil est mémorisée dans l'installation de traitement de données, base qui contient:
   - des données concernant la machine-outil déterminés (fichiers machine 12, 18), telles que plage de vitesse de rotation, diagramme caractéristique d'entraînement (effort, puissance, couple), rapports de boîte (de transmission), efforts d'avance axiale et vitesses correspondantes, effort de coupe maximal ; effort d'ablocage de la pièce, limitation de la vitesse de rotation, état du mandrin, coefficients de frottement, poupée mobile, lunette ainsi que stabilités statique et dynamique;
   - des données concernant des pièces possibles (fichiers matières de pièces 14, 20), telles que matières constitutives des pièces, états de traitement, composants d'alliage, résistances, états de surface, comportement à l'enlèvement de copeaux, aptitude à l'enlèvement de copeaux, forme du copeau; formes de pièces, comme les cotes d'ébauches, stabilités de pièces, qualités de surface, exigences de précision et conditions de coupe (coupe continue/interrompue);
   - des données concernant des outils utilisables dans la machine-outil déterminée (fichier outils 28), telles que différents types d'outils, leur stabilité et leurs dimensions, y compris de la géométrie du tranchant, capacité de charge, plage de travail; sortes de matériau de coupe et leur adéquation pour des matières de pièces déterminées, conditions de coupe, stabilité, vitesses de coupe possibles, sections de copeau et adéquation pour des usinages déterminés;
   - des données concernant différents procédés d'usinage (fichiers 24, 32), tels que tournage, dégrossissage, finissage, contournage, décolletage, ainsi qu'alésage, fraisage et filetage; et

- des données concernant des conditions additionnelles générales pendant l'usinage par enlèvement de copeaux d'une pièce, telles que durées de coupe, usure, et ainsi de suite et

b) l'opérateur introduit des données relatives à la matière de la pièce, au type d'outil, à la forme de la pièce finie et à la qualité de surface recherchée de l'article à fabriquer dans l'installation de traitement de données,

caractérisé en ce que

c) la base de connaissances contient également des sous-programmes et des données susceptibles de déterminer, ensemble avec les données précédemment indiquées et introduites par l'opérateur, les valeurs de coupe, sortes de matériau de coupe et formes de tranchant correspondantes possibles, utilisables dans la machine-outil déterminée,

d) l'installation de traitement de données détermine et affiche, au moyen des sous-programmes mentionnés, les valeurs de coupe et appariements "sortes de matériau de coupe/formes de tranchant" possibles, y compris une indication d'évaluation, les sortes de matériau de coupe possibles et les formes de tranchant possibles étant évaluées indépendamment les unes des autres d'après les données mentionnées plus haut pour la machine-outil (fichiers machine 12, 18), pièces (fichiers matières de pièces 14, 20) et type d'usinage (mémoire 66, bloc de fonction 48), puis des appariements ( PR/ SMC) de sortes de matériau de coupe et de formes de tranchant, sélectionnées par une évaluation préalable indépendante des sortes de matériau de coupe et des formes de tranchant, sont générés et également évalués, en tenant compte de la forme indiquée de la pièce, de l'usinage nécessaire et en observant le temps de travail et la qualité du produit à fabriquer par l'usinage par enlèvement de copeaux, et

e) parmi les valeurs de coupe et appariements de sortes de matériau de coupe/formes de tranchant ainsi déterminés, un ensemble est choisi automatiquement et utilisé directement pour la commande de la machine-outil, à moins que l'opérateur ne choisisse, parmi les valeurs de coupe et appariements de sortes de matériau de coupe/formes de tranchant affichés, des valeurs et des appariements à utiliser pour la commande de la machine-outil, ou à moins que l'opérateur n'introduise arbitrairement des valeurs de coupe ou des appariements de sortes de matériau de coupe/formes de tranchant dans l'installation de traitement de données, valeurs ou appariements qui sont contrôlés et évalués dans cette installation au moyen de la base de connaissances et des sous-programmes.

2. Procédé selon la revendication 1, caractérisé en ce que, pour plusieurs appariements de sortes de matériau de coupe et de formes de tranchant, l'installation de traitement de données détermine, affiche et évalue, au moyen des sous-programmes, au moins les caractéristiques de coupe suivantes:
   - les vitesses de coupe possibles,
   - les avances possibles et
   - les profondeurs de coupe possibles.

3. Procédé selon la revendication 2, caractérisé en ce que, au moyen des sous-programmes, l'installation de traitement de données adapte la vitesse de coupe et la section de copeau à la puissance maximale disponible de la machine-outil.

4. Procédé selon la revendication 3, caractérisé en ce que, au moyen des sous-programmes, l'installation de traitement de données calcule les temps de travail nécessaires pour tous les rapports de boîte possibles de la machine-outil ainsi que pour tous les appariements forme de tranchant/matériau de coupe possibles, et choisit le temps de travail le plus favorable.

Fig. 1

Fig 2